# EUROPÄISCHE PATENTSCHRIFT

(11) **EP 4 043 325 B1**
(45) Veröffentlichungstag und Bekanntmachung des Hinweises auf die Patenterteilung: **11.01.2023**
(21) Anmeldenummer: 22155909.9
(22) Anmeldetag: 09.02.2022
(51) Int. Cl.: G05B 19/418, B62D 65/02, G01B 5/00, G01B 21/04

(54) **VERFAHREN ZUR PRÜFUNG VON POSITIONIERVORRICHTUNGEN**
METHOD FOR TESTING POSITIONING DEVICES
PROCÉDÉ DE CONTRÔLE DE DISPOSITIFS DE POSITIONNEMENT

(30) Priorität: 15.02.2021 DE 102021201392
(43) Veröffentlichungstag der Anmeldung: 17.08.2022
(73) Patentinhaber: MAGNA STEYR Fahrzeugtechnik GmbH & Co KG, 8041 Graz (AT)
(72) Erfinder: GFOELLNER, Michael, 8010 Graz (AT); KRIBERNEGG, Christoph, 8451 Leibnitz (AT); NEUHOLD, Werner, 8410 Weitendorf (AT)
(74) Vertreter: Zangger, Bernd

(56) Entgegenhaltungen:
- DE-A1-102006 046 050
- DE-A1-102010 015 031
- DE-A1-102010 030 468
- DE-A1-102015 109 163
- KR-B1- 100 957 741

## Beschreibung

### Gebiet der Erfindung

Die vorliegende Erfindung betrifft ein Verfahren zur Prüfung der Maßhaltigkeit von transportablen Positioniervorrichtungen für die Produktion von Kraftfahrzeugen.

### Stand der Technik

Im Automobilbau ist es bekannt, relativ große und steife Bauteile, wie insbesondere Karosserieteile in Arbeitsstationen exakt positioniert bereitzustellen, so dass diese Bauteile weiter bearbeitet oder bestückt werden können, um letztlich ein herzustellendes Kraftfahrzeug oder Kraftfahrzeugteil zu produzieren. Manche Hersteller verwenden dabei Positioniervorrichtungen, die ortsfest in den Arbeitsstationen verbaut sind, zur Aufnahme der Karosseriebauteile. In jüngerer Zeit ist es auch bekannt transportable Positioniervorrichtungen zu verwenden, die einerseits eine positionsgenaue Aufnahme eines Bauteils, insbesondere Karosseriebauteils, ermöglichen und zudem selbst - insbesondere mittels einer geeigneten Fördertechnik - zusammen mit einem auf der Positioniervorrichtung positionierten Bauteil von einer Arbeitsstation zu einer nächsten Arbeitsstation transportiert werden. Solche Positioniervorrichtungen werden auch "Geo-Skids" genannt. Die Positioniervorrichtungen können in den jeweiligen Arbeitsstationen ihrerseits wieder, durch die Fördertechnik, geometrisch genau positioniert werden. Dadurch kann sichergestellt werden, dass das zu fertigende Bauteil, bzw. die zu fertigende Karosse, wiederholbar in einem Fahrzeugkoordinatensystem für alle Fertigungsprozesse in unterschiedlichen Arbeitsstationen bzw. Bearbeitungszellen gleich positioniert wird.

Die Positioniervorrichtungen bilden somit eine geometrisch ausgerichtete Verbindung zwischen einer Fördertechnik und dem herzustellenden Produkt und ermöglichen auch die Produktion von mehreren unterschiedlichen Produkten bzw. Fahrzeugtypen innerhalb eines geschlossenen Fertigungsprozesses.

Üblicherweise werden solche transportable Positioniervorrichtungen bzw. Geo-Skids außerhalb des Produktionsumlaufes regelmäßig in einer eigenen Messstation bzw. einem Messraum geprüft. Dazu werden die Positioniervorrichtungen zu definierten Intervallen aus dem Karosseriebauprozess, also aus dem Kraftfahrzeugproduktionsumlauf, ausgeschleust, in einen Messraum transportiert, dort mittels 3D-Koordinaten-messgerät geprüft, justiert, zur Verifizierung noch einmal geprüft und wieder in den Prozess eingeschleust. Hierbei werden die Positioniervorrichtungen direkt vermessen bzw. Messpunkte direkt an der Positioniervorrichtung erfasst. Die Frequenz solcher Überprüfungen der Maßhaltigkeit der Positioniervorrichtungen kann beispielsweise bei etwa 1 bis 4 Überprüfungen im Jahr liegen.

DE 10 2006 046 050 A1 zeigt ein bekanntes Verfahren zum Ausrichten einer Fahrzeugrohkarosserie.

### Zusammenfassung der Erfindung

Es ist eine Aufgabe der Erfindung, ein Verfahren zur Prüfung der Maßhaltigkeit von transportablen Positioniervorrichtungen für die Produktion von Kraftfahrzeugen anzugeben, dass in der Serienproduktion von Kraftfahrzeugen wenig zusätzliche Zeit beansprucht und dennoch ein zuverlässiges Ausscheiden fehlerhafter Positioniervorrichtungen erlaubt, so dass das Verfahren insgesamt eine effiziente und maßhaltig stabile Serienproduktion von Kraftfahrzeugen ermöglicht.

Die Lösung der Aufgabe erfolgt durch ein Verfahren zur Prüfung der Maßhaltigkeit von transportablen Positioniervorrichtungen für die Produktion von Kraftfahrzeugen, wobei die Positioniervorrichtungen jeweils Aufnahmen aufweisen, so dass ein Karosseriebauteil eines herzustellenden Kraftfahrzeugs geometrisch exakt auf der Positioniervorrichtung positioniert werden kann, und wobei die Positioniervorrichtungen in einem Kraftfahrzeugproduktionsumlauf mit dem jeweils darauf positionierten Karosseriebauteil zur Produktion der Kraftfahrzeuge in unterschiedliche Arbeitsstationen bewegt werden, wobei während dem Kraftfahrzeugproduktionsumlauf in den Arbeitsstationen und / oder in einer im Kraftfahrzeugproduktionsumlauf speziell zur Erfassung von Messwerten vorgesehenen Inline-Messstation vordefinierte Messpunkte an dem jeweils auf der Positioniervorrichtung positionierten Karosseriebauteil lagevermessen werden, wobei durch Auswertung der Messpunkte durch eine Steuereinheit die Maßhaltigkeit der transportablen Positioniervorrichtung bestimmt wird.

Erfindungsgemäß werden transportable Positioniervorrichtungen indirekt lagevermessen, indem die Lage von Messpunkten an den transportierten Karosseriebauteilen gemessen wird, bevorzugt die dreidimensionale Lage, also die 3D-Koordinaten der vordefinierten Messpunkte am transportierten Bauteil. Diese Messungen werden im gewöhnlichen Kraftfahrzeugproduktionsumlauf, also im gewöhnlichen Umlaufprozess der Positioniervorrichtungen und der Karosseriebauteile vorgenommen. Erfindungsgemäß ist eine Steuereinheit dazu ausgebildet, aus den Messpunkten, und insbesondere aus Abweichungen der Messpunkte von vorgesehenen Standardwerten, auf wahrscheinliche Fehler der Positioniervorrichtungen zu schließen, also auf deren Maßhaltigkeiten und insbesondere auf Maßhaltigkeiten außerhalb eines festgelegten Toleranzbereichs. Derart fehlerhafte Positioniervorrichtungen können dann beispielsweise in eine gesonderte Messstation bzw. Kontrollstation außerhalb des gewöhnlichen Kraftfahrzeugproduktionsumlaufes ausgesondert werden und beispielsweise korrigiert oder ausgeschieden werden.

Durch die Messung im laufenden Produktionsbetrieb der Fahrzeugfertigung kann das Überprüfen und eventuelle Warten oder Ausscheiden von ungeeigneten Positioniervorrichtungen ohne wesentliche Zeitverluste und somit besonders effizient erfolgen. Die Messung erfolgt somit in einer Inline-Messstation oder Arbeitsstation im Produktionsumlauf. Die Inline Messung kann in den Arbeitststationen erfolgen und/oder in einer im Produktionsumlauf speziell zur Erfassung von Messwerten vorgesehenen Inline-Messstation. Es kann somit eine zum Zweck der Prozessüberwachung für gewöhnlich mit einer hochgenauen Messeinrichtung zur Erfassung der Messpunkte M ausgestatte Station im Produktionsumlauf für die mittelbare, indirekte Vermessung der Positioniervorrichtungen genutzt werden. Diese Auswertung zur Maßhaltigkeit der Positioniervorrichtungen ist von der bevorzugten zusätzlichen Auswertung der selben Messpunkte hinsichtlich der Maßhaltigkeit des Karosseriebauteils selbst zu unterscheiden.

Vorzugsweise sind die vordefinierten Messpunkte sowie die Messanlage bereits standardmäßig zur Prozesskontrolle des Karosseriebauteils bzw. zur Kontrolle der Maßhaltigkeit des Karosseriebauteils selbst vorhanden, sodass zur Prüfung der Maßhaltigkeit der transportablen Positioniervorrichtung bzw. des Geo-Skid keine zusätzlichen Messpunkte sowie keine zusätzliche Messanlagen erforderlich sind. Bevorzugt werden zur Überprüfung der Maßhaltigkeit der transportablen Positioniervorrichtung bzw. des Geo-Skids keine zusätzlichen Messungen durchgeführt werden bzw. ist keine zusätzliche Messzeit erforderlich, die den Produktionsprozess verlangsamen würde. Bereits vorhandene Messpunkte/Messdaten, die zur Überprüfung des Karosseriebauteils selbst erforderlich und daher vorhanden sind, werden entsprechend ausgewertet, sodass ein Rückschluss auf die Maßhaltigkeit der Positioniervorrichtung, also des Geo-Skids, vorgenommen wird.

Vorzugsweise sind die Positioniervorrichtungen in der Steuereinheit identifiziert - verfügen also jeweils über eine einzigartige ID bzw. eine eindeutige Identifizierungskennung. Bevorzugt werden während mehreren Kraftfahrzeugproduktionsumlaufen in den Arbeitsstationen und / oder in einer speziell zur Erfassung von Messwerten vorgesehenen Inline-Messstation bzw. einem Messraum vordefinierte Messpunkte an dem jeweils auf der selben identifizierten Positioniervorrichtung positionierten Karosseriebauteil lagevermessen, wobei durch Auswertung der Messpunkte der selben identifizierten Positioniervorrichtung in den mehreren Kraftfahrzeugproduktionsumlaufen, durch die Steuereinheit, die Maßhaltigkeit der jeweiligen identifizierten transportablen Positioniervorrichtung bestimmt wird. Es erfolgt somit bevorzugt eine Verfolgung der einzelnen, identifizierten Positioniervorrichtungen über mehrere Kraftfahrzeugproduktionsumlaufe, also über mehrere Umläufe bzw. Produktionszyklen. Aus dem Verhalten der Messwerte oder Messwertabweichungen bei mehreren, unterschiedlichen getragenen Karosseriebauteilen kann einfacher darauf zurückgeschlossen werden, welche Abweichungen auf Eigenschaften des wechselnden, transportierten Karosseriebauteils beruhen und welche Abweichungen auf Eigenschaften des verwendeten, identifizierten Geo-Skids beruhen. Durch diese Methodik können vorteilhaft nicht nur einzelbauteiloder bauteilchargenspezifische Einflüssen ausgeschlossen werden, sondern auch sonstige externe Einflüsse wie Vibrationen, Licht, Verschmutzung etc. ausgeschlossen werden.

Vorzugsweise werden die vordefinierten Messpunkte an dem jeweils auf der Positioniervorrichtung positionierten Karosseriebauteil von der Steuereinheit zur Auswertung der Messpunkte einer oder mehreren vordefinierten Messpunktgruppen zugeordnet, wobei in einer Messpunktgruppe jeweils sich korrelierend verhaltende Messpunkte gruppiert sind. Alle Messpunkte werden also einer oder mehreren Messpunktgruppen zugeordnet, um von diesen Messpunktgruppen dann genauer auf eventuelle Fehlergruppen oder die Art des Fehlers rückschließen zu können. Solche Messpunktgruppen können beispielsweise sein: x-Position des Bauteils, hintere y-Position des Bauteils, etc. Nur diese Zuordnung dieser bevorzugt ohnehin schon vorhandenen bzw. genutzten Messpunkte zu Messpunktgruppen sowie deren Auswertung anhand des Algorithmus ist ein erfindungsgemäßer "Zusatzaufwand", da die Messpunkte sowie die Erfassung deren Messwerte ohnehin schon, zwecks Überwachung der Maßhaltigkeit des Karosseriebauteils selbst, standardmäßig vorhanden sind bzw. durchgeführt werden.

Die Bezeichnungen x, y und z beziehen sich dabei auf übliche Fahrzeugkoordinatensysteme. Die Richtung x erstreckt sich somit auf eine Längserstreckung, die Richtung y auf eine seitliche Erstreckung normal auf die Richtung x und die Richtung z auf eine vertikale Erstreckung des Bauteils und/oder des Fahrzeuges.

Bevorzugt werden die vordefinierten Messpunkte genau sieben Messpunktgruppen zugeordnet, insbesondere einer x-Messpunktgruppe, zwei y-Messpunktgruppen (vorzugsweise in x Richtung vorne und hinten) und vier z-Messpunktgruppen (vorzugsweise vorne links und rechts und hinten links und rechts).

Bevorzugt ist jede Messpunktgruppe genau einer Aufnahme der Positioniervorrichtung zugeordnet, wobei aus einer Lageabweichung in einer Messpunktgruppe von der Steuereinheit die Maßhaltigkeit an der zugeordneten Aufnahme bestimmt wird. Einer Aufnahme können dabei mehrere Messpunktgruppen zugeordnet sein.

Besonders bevorzugt weisen die Positioniervorrichtungen jeweils genau vier Aufnahmen auf, so dass ein Karosseriebauteil eines herzustellenden Kraftfahrzeugs geometrisch exakt auf der Positioniervorrichtung positioniert werden kann.

Die vier Aufnahmen sind bevorzugt gebildet durch eine xyz-Aufnahme, also eine Aufnahme die die Position in den Richtungen x, y und z festlegt, eine yz-Aufnahme, die Positionen des Bauteils in y und z Richtung festlegt, und zwei z-Aufnahmen, die lediglich die Positionierung in z-Richtung, also vertikal, festlegen.

Bevorzugt weisen die Positioniervorrichtungen jeweils zusätzlich zu den Aufnahmen weitere Auflagepunkte auf, um ein Durchhängen der auf der Positioniervorrichtung positionierten Karosseriebauteile zu verhindern. Diese Auflagepunkte stützen das getragene Bauteil somit in z-Richtung, dienen aber nicht der exakten Positionierung des Bauteils.

### Kurzbeschreibung der Zeichnungen

Die Erfindung wird im Folgenden beispielhaft unter Bezugnahme auf die Zeichnungen beschrieben.
- Fig. 1: zeigt ein Ablaufschema eines Kraftfahrzeugfertigungsprozesses, in dem ein erfindungsgemäßes Verfahren eingesetzt wird.
- Fig. 2: zeigt schematisch Verfahrensschritte zur Bestimmung der Maßhaltigkeit einer transportablen Positioniervorrichtung durch Auswertung der Messpunkte durch eine Steuereinheit, in einem erfindungsgemäßen Verfahren.
- Fig. 3: ist eine schematische Darstellung der geometrischen Ausrichtung eines Karosseriebauteils (oben) durch eine Positioniervorrichtung (unten) und der verwendeten Aufnahmen.
- Fig. 4: ist eine schematische Darstellung der Messpunktgruppen an einem Karosseriebauteil.
- Fig. 5: ist eine schematische Darstellung der Zuordnung von Messpunkten zu Messpunktgruppen an einem Karosseriebauteil.

### Detaillierte Beschreibung der Erfindung

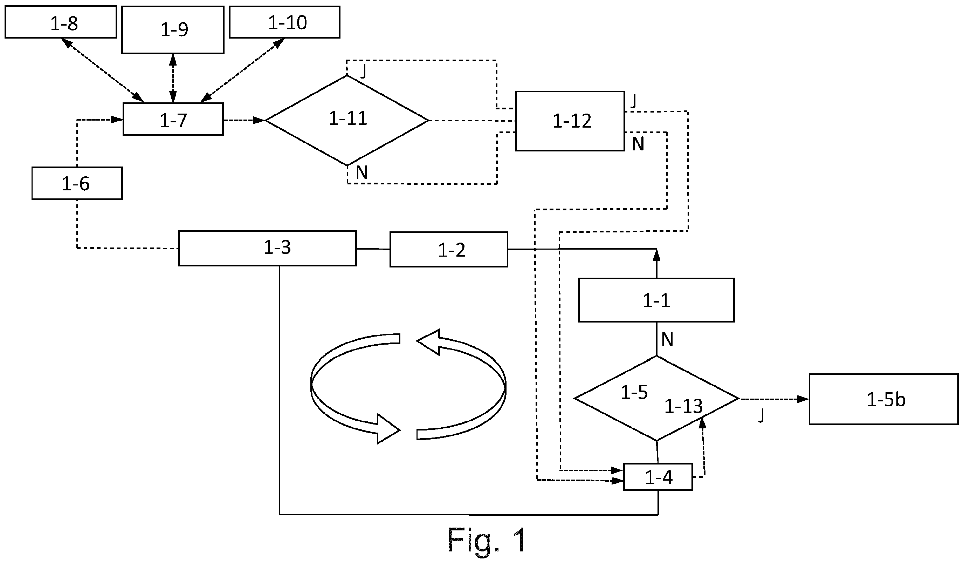

Fig. 1 zeigt ein Ablaufschema eines Kraftfahrzeugfertigungsprozesses, in dem ein erfindungsgemäßes Verfahren eingesetzt wird.

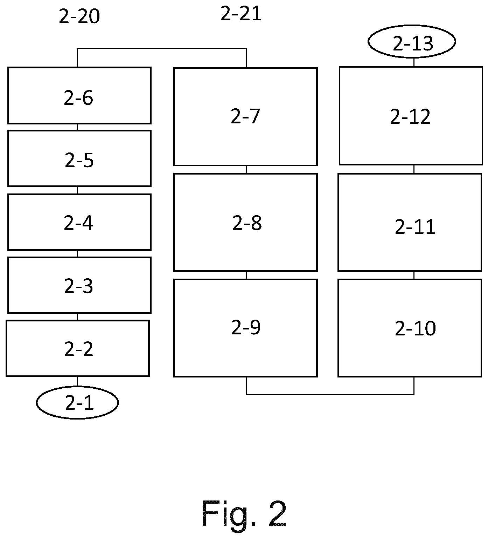

Dabei bezeichnen die Bezugszeichen einzelne Schritte des Ablaufschemas:
1-1 Beladestation: der Start des Rohbauumlaufs bzw. Produktionsumlaufs, durch Einschleusen einer Positioniervorrichtung P in eine Beladestation
1-2 Fertigungsdurchlauf des Karosseriebauteils K in einer Rohbauanlage
1-3 Mögliche Messwertesammlung der Messwerte M im n-ten Durchlauf mittels Inlinestationen bzw. Inline-Messstation, also Erfassung von Bauteilmessdaten des Karosseriebauteils K
1-4 Lesestelle (RFID od. dgl.)
1-5 Entscheidungsschritt - Ausschleusen? (Ausschleusestation)
   J Ja
   N Nein
1-5b Aussschleusen von leeren Geo-Skid P für Messtechnik/Korrektur
1-6 Schnittstelle Messsystem
1-7 Datenbank der Messdaten M für Berechnungsalgorithmus
1-8 Durchlaufcounter (zählt Geo-Skid Umläufe/Messzyklen)
1-9 Berechnungsalgorithmus (Programm-Code) - siehe Fig. 2
1-10 Visualisierung von Berechnungen / Abweichungen / Auswertungen der Messdaten 1-7, M durch Berechnungsalgorithmus 1-9
1-11 Entscheidungsschritt - Geo-Skid P auffällig seit n Durchläufen in Relation zu Zyklus?
1-12 MES Produktionssystem
1-13 wie 5: Entscheidungsschritt - Ausschleusen? (Ausschleusestation) - Möglichkeit einen Geo-Skid P aus dem Umlauf in eine definierte Parkposition zu befördern

In einem Umlaufzyklus des Kraftfahrzeugproduktionsumlaufes wird ein Geo-Skid P, also eine transportable Positioniervorrichtung P, durch eine Produktionsanlage befördert und markante definierte Merkmale (=markante Messpunkte einer jeweiligen Messpunktgruppe) der darauf beförderten Bauteile oder Baugruppen werden bei jedem Umlauf von einem Messsystem als Messpunkte M vermessen.

Der Produktionsumlauf beginnt mit 1, dem Einschleusen des Geo-Skids in eine Produktionsanlage. Hier wird dieser mit Bauteilen bestückt, die später beim Fertigungsdurchlauf oder Bearbeitungsdurchlauf 2 mit einander einem Bearbeitungsprozess, wie z.B. Verschweißen, ausgesetzt. Zwischen und/oder am Ende des Fertigungsdurchlaufes 2 besteht die Möglichkeit, mindestens 1x pro Umlauf, Messdaten zu generieren 3, welche über eine Schnittstelle 6 in eine Datenbank 7 übertragen werden. Unter anderem, werden in der Datenbank 7 auch Daten wie die Anzahl der Umläufe 8 gespeichert. Zusätzlich läuft ein Berechnungsalgorithmus 9 in einer Steuereinheit, welcher aus den gewonnenen Messdaten M die geometrische Beschaffenheit des Geo-Skids P bewertet und errechnet, ob die vorgegebenen zulässigen Maximalabweichungen in Relation zu einem definierten Umlauf- und Messzyklus eingehalten werden (siehe Funktionsweise Algorithmus in Fig. 2).

Wird eine Abweichung bei der Prüfung 9 detektiert, wird eine Meldung generiert, beispielsweise in Form einer SMS, eines Emails oder dergleichen, und über das Produktionssystem 12 an einen definierten Verteiler gesendet. In diesem System wird zusätzlich ein Prozess gestartet, der bewirkt, dass die betroffene Positioniervorrichtung P vorgemerkt und bei Erreichen einer definierte Lesestelle 4, zum Beispiel durch RFID, erkannt und in der nächsten Ausschleusestation 13 in eine Parkposition befördert wird. Der Geo-Skid/Positioniervorrichtung P kann dann beispielsweise nicht ohne manuelle Freigabe wieder in das System eingeschleust werden. Dieser Prozess ermöglicht, durch den Algorithmus 9 und die hiermit erkannten geometrischen Abweichungen, dass keine qualitativ minderwertigeren-, oder Ausschussprodukte in der Produktionsanlage hergestellt werden können.

Fig. 2 zeigt schematisch Verfahrensschritte zur Bestimmung der Maßhaltigkeit einer transportablen Positioniervorrichtung P durch Auswertung der Messpunkte M durch eine Steuereinheit, in einem erfindungsgemäßen Verfahren und somit den Algorithmus in Schritt 9 der Fig. 1 genauer.

Dabei bedeuten die Bezugszeichen:
2-20 Für jede Messpunktgruppe
2-21 Für jede Geo-Skid ID und jeden Datenpunkt
2-1 Start
2-2 Berechnung sprunghafte Änderungen
2-3 Korrektur Mittelwerte zu null
2-4 Berechnung Kovarianzmatrix
2-5 Berechnung optimale Verschiebung
2-6 Gruppierung Verschiebung nach Geo-Skid ID
2-7 Berechnung sprunghafte Änderungen in den optimalen Verschiebungen
2-8 Berechnung Mittelwert und Standardabweichung seit letztem Sprung
2-9 Berechnung Wahrscheinlichkeit Wert außerhalb Toleranz z.B. ± 0,2 mm
2-10 Berechnung Wahrscheinlichkeit Toleranzüberschreitung mindestens eines Merkmals pro Geometrieskid
2-11 Visualisierung Zeitreihen der optimalen Verschiebungen und Mittelwerte
2-12 Sortierung Geo-Skids nach Wahrscheinlichkeit Toleranzüberschreitung
2-13 Ende

Die Funktion des Algorithmus liegt darin, die NIO (Nicht-in-Ordnung) Geometrieskids, also Geo-Skids = Positioniervorrichtungen P, aus den serienmäßig erfassten Inlinemessdaten der Karosseriemesspunkte zu erkennen. Dazu werden zunächst die Messungen aller Messpunkte M auf sprunghafte Änderungen aufgrund von manuellen Eingriffen untersucht. Jeder Abschnitt mit konstantem Mittelwert wird um diesen korrigiert, sodass Datenreihen mit einem Gesamtmittelwert von null entstehen. Weil sich Fehler des Geo-Skids P immer auf mehrere Merkmale gleichzeitig auswirken, werden die Messpunkte M zu Gruppen zusammengefasst, die sich durch einen Defekt gemeinsam ändern. So ist eine Verschiebung in x-Richtung, wenn sie von einem defekten Geometrieskid P stammt, an allen Messpunkten M zu beobachten. Grund dafür ist, dass die Ausrichtung hier nur an einem einzigen Punkt erfolgt. Ist dieser nicht korrekt, so ist der gesamte Rohbau, Karosseriebauteil K, verschoben. In y-Richtung wird vorne und hinten separat ausgerichtet. Deshalb zeigen sich Fehler entweder an allen Punkten vorne oder an allen Punkten hinten. Analog ist es in z-Richtung, hier wird allerdings an allen vier Eckpunkten justiert, weshalb sich Fehler jeweils links vorne, rechts vorne, links hinten, oder rechts hinten, aber immer bei allen Merkmalen gemeinsam, zeigen. Für jeden dieser sieben Bereiche wurden die relevanten Punkte definiert und zu Messpunktgruppen zusammengefasst. Für jede Gruppe wird mittels des sogenannten Mahalanobis-Abstandes aus den Daten abgeschätzt, was einen "normalen" Datenpunkt kennzeichnet.

Für Messungen in y- und z-Richtung spielt auch der Abstand von Auflage, Angriffs-, und Messpunkt M eine Rolle. Bei der Aufnahme eines Bauteils mittels Geo-Skid P wird diese an verschiedenen Punkten bewegt, um sie korrekt auszurichten. Ein Angriffspunkt ist jener, der bei der Aufnahme eingerichtet wird, und an dem eine unerwünschte Verschiebung auftreten kann. Ein Auflagepunkt A ist ein Punkt, um den sich das Bauteil beim Einrichten dreht. Diese ändern sich je nach Angriffspunkt. Jede Messpunktgruppe hat genau einen Angriffspunkt, kann aber mehrere Auflagepunkte A haben; die Auswertung einer Messpunktgruppe ergibt die Abweichung eines bestimmten Angriffspunktes. Nicht alle Messpunkte M liegen genau auf einer Geraden mit Angriffs- und Auflagepunkt A. Als Näherung werden Messpunkte M jeweils auf die am nähest liegende Verbindungslinie von Angriffs- und Auflagepunkt A projiziert. Liegt ein Messpunkt M näher am Auflagepunkt A als der Angriffspunkt, so ist eine Verschiebung des Angriffspunktes am Messpunkt nur in kleinerem Ausmaß zu beobachten. Umgekehrt verhält es sich, wenn der Messpunkt M weiter vom Auflagepunkt A entfernt liegt als der Angriffspunkt. Der berücksichtigte Faktor der Verschiebungen ist durch den Hebel zwischen den Punkten gegeben.

Danach werden in jeder Gruppe alle Merkmale gemeinsam so weit verschoben, bis der Datenpunkt so normal wie möglich erscheint. Diese Verschiebung gibt einen Schätzwert dafür an, wie groß der Einfluss des Geo-Skids P auf die Messungen war.

Durch Beobachtung desselben Geo-Skids P bei mehreren Durchläufen mit verschiedenen Karosserien K kann festgestellt werden, ob eine systematische Abweichung der Messdaten tatsächlich vom Geo-Skid P verursacht wird. Wird eine ähnliche Verschiebung in die gleiche Richtung bei vielen Durchläufen ermittelt, so liegt ein Defekt des Geo-Skids P nahe. Um dies zu quantifizieren, wird in den Ergebnissen nach sprunghaften Änderungen gesucht und schließlich der Mittelwert der Verschiebungen seit dem letzten Sprung gebildet. Dieser ist als Schätzwert für die tatsächliche Verschiebung des Geo-Skids P geeignet. Abschließend wird für jeden Geometrieskid P die Wahrscheinlichkeit berechnet, mit welcher eine Abweichung von mehr als ± 0,20 mm - je nach Toleranzvorgabe des zur Anwendung kommenden Standards, beispielsweise ± 0,20 mm - vorliegt.

Die Ergebnisse werden beispielsweise als Text in der Konsole ausgegeben. Geo-Skids P werden nach Wahrscheinlichkeit einer Toleranzüberschreitung in mindestens einer Messpunktgruppe sortiert. Überdies wird der beste Schätzwert für die Abweichung einer Messpunktgruppe mit Standardabweichung sowie die Anzahl der für den Schätzwert herangezogenen Messungen seit dem letzten Change Point im Vergleich zur Gesamtanzahl der Messungen laut herangezogenen Datensatz ausgewiesen.

Bei einer automatisierten Ausschleusung wird der Wahrscheinlichkeitswert für die Entscheidung herangezogen. Hierzu wird ein Grenzwert sowie eine Mindestanzahl an Messungen definiert (z.B.: 80% Wahrscheinlichkeit für Abweichung von mehr als ± 0,20 bei mindestens 20 Messungen). Bei einer Erfüllung der Bedingung kommt es dann zum Entscheidungsschritt laut Fig. 1, Schritt 1-11.

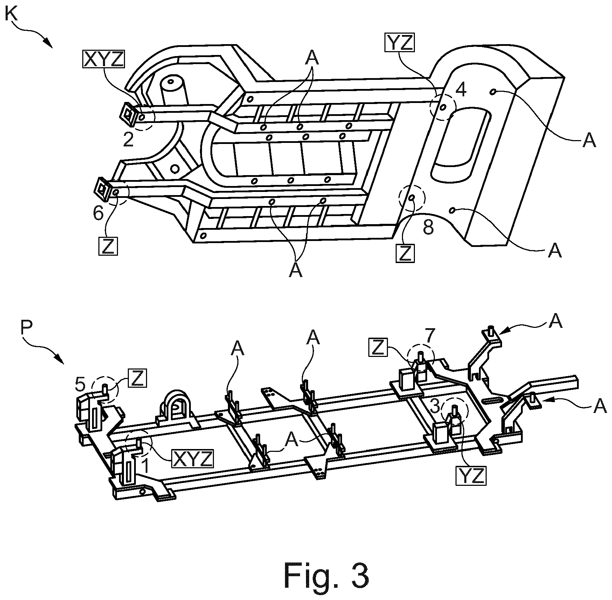

Fig. 3 ist eine schematische Darstellung der geometrischen Ausrichtung eines Karosseriebauteils K (oben) durch eine Positioniervorrichtung P (unten) und der verwendeten Aufnahmen.

Dabei zeigt die Darstellung der Positioniervorrichtung P (unten) die vier Aufnahmen 1, 3, 5, 7, über welche die Ausrichtung des Bauteils - hier eines Fahrzeugunterbodens - am Geo-Skid P erfolgt, nämlich 1, 3, 5, und 7.

Dazu korrespondieren in der Darstellung des Karosseriebauteils K (oben) die entsprechenden Öffnungen 2, 4, 6 und 8.

Zusätzlich zu diesen vier Aufnahmepunkten 1, 3, 5, 7 sind weitere Auflagepunkte A in z-Richtung am Geo-Skid P und am Bauteil K vorgesehen.

Bezüglich beispielsweise Messpunktgruppe "x": Die Ausrichtung des Bauteils K in die x-Wirkrichtung am Geo-Skid P erfolgt über die Hauptaufnahme xyz (also zuständig für Positionierung in x, y und z Richtung) 1 des Geo-Skids P links vorne und ein Rundloch 2 im Bauteil K.

Hat der Geo-Skid P eine maßliche Abweichung in x-Richtung, dann ist somit das komplette Bauteil K betroffen - sichtbar in allen beispielsweise 57 x-Messmerkmalen M am Bauteil.

Messpunktgruppen y vorne und y hinten: Die y-Ausrichtung erfolgt vorne ebenso wie in x-Wirkrichtung über die Aufnahme xyz 1 des Geo-Skids P links vorne. Hat der Geo-Skid P eine maßliche Abweichung in y-Richtung im vorderen Bereich, ist auch das Bauteil K im vorderen Bereich betroffen - sichtbar in den beispielsweise 26 y-Messmerkmalen M vorne.

Im Gegensatz zur x-Wirkrichtung erfolgt für die y-Wirkrichtung eine weitere Ausrichtung im hinteren Bereich durch die Aufnahme yz 3 am Geo-Skid P und einem Langloch in der Bodengruppe 4. Eine maßliche Abweichung am Geo-Skid P hinten in y-Wirkrichtung betrifft somit nur den hinteren Bereich des Bauteils K und ist sichtbar in den 11 y-Messmerkmalen M hinten.

Messpunktgruppen z links vorne, z rechts vorne, z links hinten und z rechts hinten: Es gilt das selbe Prinzip in z-Wirkrichtung.

Die Ausrichtung des Bauteils K erfolgt über alle 4 Aufnahmen am Geo-Skid P, nämlich 1, 3, 5 und 7, und die respektiven Löcher am Bauteil K, nämlich 2, 4, 6 und 8. 6 ist ein Langloch und 8 ein Spannloch ohne Fixierung.

Besteht eine z-Abweichung links vorne am Geo-Skid P, ist dies sichtbar in allen 12 z-Messmerkmalen M links vorne. Diese Abweichung links vorne, welche durch die Aufnahme 1 am Geo-Skid P verursacht wird, hat keine kausale Auswirkung auf die z-Merkmale am Bauteil in den anderen 3 z-Messpunktsgruppen, weil diese durch 3, 5 und 7 ausgerichtet werden. Selbes Prinzip gilt für die anderen 3 Aufnahmen.

Zur Rolle von Aufnahmen und Auflagen: Über die Aufnahmen wird das Bauteil K geometrisch am Geo-Skid P ausgerichtet. Es gibt 4 Aufnahmen (1, 3, 5, 7) für die Bestimmung der Lage laut 3-2-1 Aufnahmekonzept, dargestellt in Fig. 3. An den zusätzlich 6 z-Auflagen A liegt das Bauteil nur auf, damit es nicht durchkippt - dort erfolgt aber keine geometrische Ausrichtung. Nur die Aufnahmen 1, 3, 5, 7 sind geometrisch relevant für die Messpunktgruppen. Die Darstellung der z-Auflagen A in Fig. 3 zeigt, wo der Geo-Skid P das Bauteil K, abgesehen von den für die Positionierung relevanten Aufnahmen 1, 3, 5, 7, berührt.

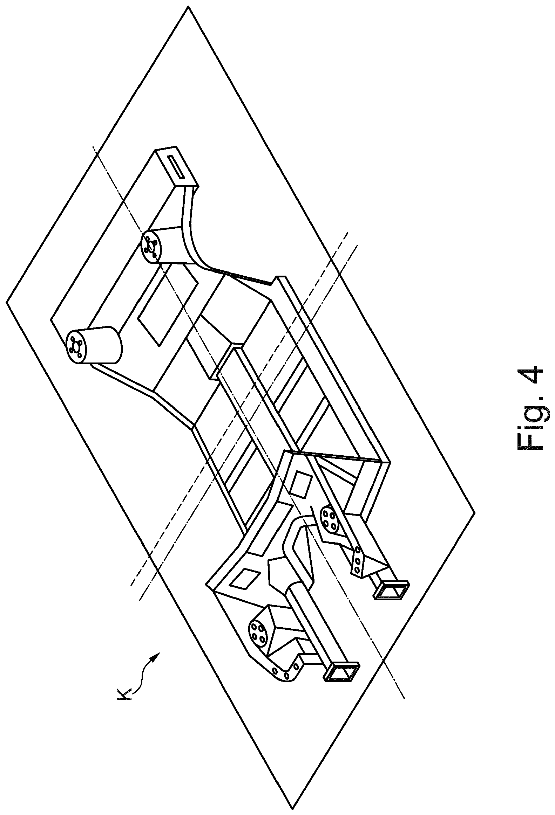

Fig. 4 ist eine schematische Darstellung der sieben Messpunktgruppen an einem Karosseriebauteil K (Fahrzeugunterboden).

Messpunktgruppen gibt es nur am Bauteil K. Sie stellen eine Zusammenfassung von Messmerkmalen/Messpunkten M zusammen, welche sich gleich verhalten, da sie in gleicher Weise von einer gemeinsamen Ausrichtung (= respektive Aufnahme am Geo-Skid) beeiflusst werden. Die Messmerkmale M sind durch die Messplanung sowie die Taktzeit vorgegeben.

Entsprechend ihrer Wirkrichtung und dem Ort am Bauteil K werden sie zur Berechnung des Algorithmus der korrekten Messpunktgruppe zugeordnet.

Diese Messplanung/Messpunktplanung richtet sich vorzugsweise ausschließlich nach dem Karosseriebauteil K bzw. danach, welche Messpunkte zur Prozesskontrolle/Serienüberwachung des Karosseriebauteils K bzw. zur Kontrolle der Maßhaltigkeit des Karosseriebauteils selbst erforderlich sind. Erst anhand dieser ohnehin gegebenen Messpunkte werden die schon vorhandenen Messpunkte den Messpunktgruppen zugeordnet bzw. entsprechend der durch ihre Lage bedingten Wirkung für die einzelnen Raumrichtungen den jeweiligen Messpunktgruppen zugeordnet.

In Fig. 4 ist dargestellt: ein schwarzer Rahmen der alle Messpunkte M der Messpunktgruppe x umfasst - hier zum Beispiel 57 Messpunkte M. Eine gepunktete Linie trennt die Messpunkte M in den Bereich y-vorne der 26 Messpunkte M umfasst und y-hinten, der 11 Messpunkte M umfasst. Zwei sich kreuzende gestrichelte Linien trennen die Messpunkte M in die Bereiche z-vorne links (12 Messpunkte), z vorne rechts (12 Messpunkte), z hinten link (6 Messpunkte), z hinten rechts (6 Messpunkte).

Viele oder alle einzelnen Messpunkte M können jeweils mehreren Bereichen oder Messpunktgruppen zugeordnet sein.

Beispiel Messpunktgruppe x: Die Hauptaufnahme links vorne beeinflusst alle 57 x-Merkmale (Messpunkte M) über das gesamte Bauteil, weil die Ausrichtung in x-Wirkrichtung nur dort vorne stattfindet.

Beispiel Messpunktgruppen y vorne und hinten: Die Hauptaufnahme links vorne beeinflusst 26 y-Merkmale M vorne. Aufnahme links hinten beeinflusst 11 y-Merkmale M hinten.

Beispiel Messpunktgruppe z links vorne: Die Hauptaufnahme links vorne beeinflusst 12 z-Merkmale M links vorne. Das selbe Prinzip gilt für die anderen 3 Messpunktgruppen der z-Wirkrichtung.

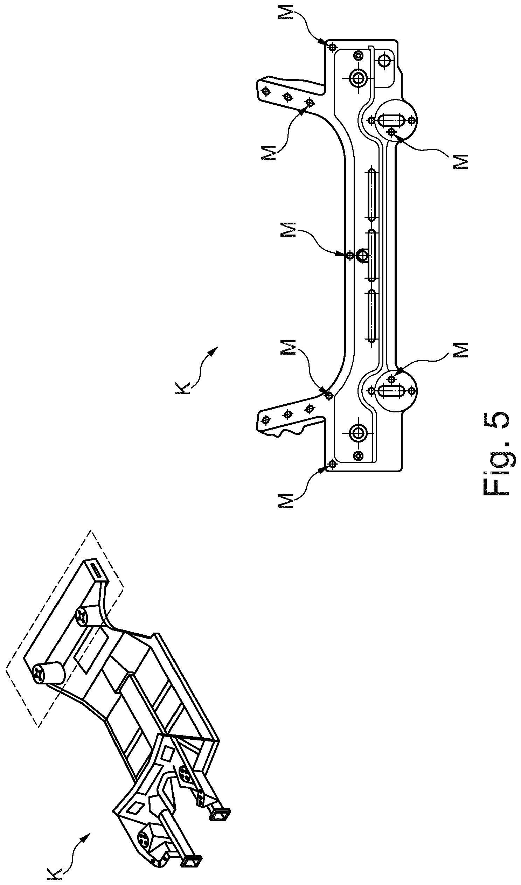

Fig. 5 ist eine schematische Darstellung der Zuordnung von Messpunkten M zu Messpunktgruppen an einem Karosseriebauteil K, nämlich an einem Heckabschluss.

Die kleine Darstellung der Fig. 5 links oben zeigt die Lage des Heckabschlusses (Fig. 5 rechts unten) im Karosseriebauteil der Fig. 4.

Bei einem Heckabschluss werden 7 Messpunkte M gemessen, wobei davon 7 Messpunkte M die x-Richtung betreffen, 2 Messpunkte M die y-Richtung betreffen und 2 Messpunkten M die z-Richtung betreffen.

Diese Messpunkte M (Messmerkmale) werden zugeordnet in:
7 x-Messmerkmale für Messpunktgruppe x
2 y-Messmerkmale für Messpunktgruppe y hinten
1 z-Messmerkmale für Messpunktgruppe z hinten rechts
1 z-Messmerkmale für Messpunktgruppe z hinten links

Eine Messpunktgruppe entspricht somit einem Bereich. Insgesamt gibt es sieben Messpunktgruppen (1x, 2y, 4z) in denen sich korrelierend verhaltenden Messmerkmale M des Produktes K gruppiert werden. Zu jeder Messpunktgruppe gibt es eine Vielzahl von Messpunkten M. Am Beispiel der Heckverkleidung (Fig. 5) werden die 7 x-Merkmale (= x Messpunkte M) der Gesamtmesspunktgruppe x (= eingerahmter Bereich in Fig. 4) über die ganze Karosserie K zugeordnet, da sich alle 57 x-Merkmale M im Produkt K unabhängig von der Position korrelierend verhalten, wenn es bei der Vorrichtung zu einer Verschiebung in x kommt. Die 2 y-Merkmale M werden betreffend des Heckverkleidungsbauteils nur der y-Messpunktgruppe hinten (Fig. 4 hinter punktierter Linie) zugeordnet, da sich y-Merkmale (Messpunkte) im vorderen Bereich der Karosse K nicht korrelierend verhalten (begründet durch den Abstand zu Aufnahme hinten und Kompensationseigenschaften durch Steifigkeit der Karosse).

Die beiden y-Messpunktgruppen (y vorne und y hinten sind wie an der punktierten Linie in Fig. 4 ersichtlich, in einen vorderen und einen hinteren Bereich des (Kunden)Bauteils K eingeteilt.

Da das Bauteil K sowohl rechts als auch links hinten auf der Vorrichtung aufgenommen wird, bedeutet eine Abweichung auf einer Seite nicht gleichbedeutend eine Abweichung auf der anderen Seite. Nach derselben Logik werden die z-Merkmale jeweils pro Seite und vorne/hinten in Messpunktgruppen zusammengefasst, da sich die korrelierenden Merkmale M in 4 Bereiche zusammenfassen lassen. Die vier z-Messpunktgruppen sind wie an den beiden strichlierten Linien in Fig. 4 ersichtlich, in einen vorderen und einen hinteren sowie einen linken und rechten Bereich des Bauteils K eingeteilt.

Warum gerade 7 Messpunktgruppen vorteilhaft sind: Die Bereiche entstehen als Lösung der Frage "Was ist die minimale Anzahl an Gruppen/Bereichen, um maximale Informationen zu generieren?". Beim einem hier zur Anwendung kommenden 3-2-1 Aufnahme- und Spannkonzept bei einer selbsttragenden Karosse K und den definierten Messpunkten M am Bauteil K sind das genau sieben. Definiert man zum Beispiel weitere x-Bereiche, werden diese keine zusätzliche Information bringen, da sich alle x-Merkmale M über die Karosse K gleich verhalten. Umgekehrt würde man bei einer Reduktion der 2 y-Bereiche auf einen einzelnen y-Bereich relevante Information verlieren, da die y-Merkmale vorne und hinten nicht korrelieren und eine Trennung unbedingt erforderlich ist.

### Bezugszeichenliste

A Auflagepunkt
K Karosseriebauteil
M Messpunkt
P Positioniervorrichtung bzw. Geo-Skid
X, Y, Z Richtung der Positionierung an Aufnahme
J Ja
N Nein

1 Aufnahme an Positioniervorrichtung
2 Aufnahme-Öffnung an Karosseriebauteil
3 Aufnahme an Positioniervorrichtung
4 Aufnahme-Öffnung an Karosseriebauteil
5 Aufnahme an Positioniervorrichtung
6 Aufnahme-Öffnung an Karosseriebauteil
7 Aufnahme an Positioniervorrichtung
8 Aufnahme-Öffnung an Karosseriebauteil

1-1 Beladestation
1-2 Fertigungsdurchlauf/Bearbeitung in Arbeitsstationen
1-3 Messwertesammlung, Erfassung von Bauteilmessdaten des Karosseriebauteils
1-4 Lesestelle
1-5 Entscheidungsschritt - Ausschleusen?
1-5b Aussschleusen für Messtechnik/Korrektur
1-6 Schnittstelle Messsystem
1-7 Datenbank der Messdaten
1-8 Durchlaufcounter
1-9 Berechnungsalgorithmus
1-10 Visualisierung
1-11 Entscheidungsschritt - Positioniervorrichtung auffällig?
1-12 MES Produktionssystem
1-13 Entscheidungsschritt - Ausschleusen?
2-1 Start
2-2 Berechnung sprunghafte Änderungen
2-3 Korrektur Mittelwerte zu null
2-4 Berechnung Kovarianzmatrix
2-5 Berechnung optimale Verschiebung
2-6 Gruppierung Verschiebung nach Geo-Skid ID
2-7 Berechnung sprunghafte Änderungen in den optimalen Verschiebungen
2-8 Berechnung Mittelwert und Standardabweichung seit letztem Sprung
2-9 Berechnung Wahrscheinlichkeit Wert außerhalb Toleranz z.B. ± 0,2 mm
2-10 Berechnung Wahrscheinlichkeit Toleranzüberschreitung mindestens eines Merkmals pro Geometrieskid
2-11 Visualisierung Zeitreihen der optimalen Verschiebungen und Mittelwerte
2-12 Sortierung Geo-Skids nach Wahrscheinlichkeit Toleranzüberschreitung
2-13 Ende
2-20 Für jede Messpunktgruppe
2-21 Für jede Geo-Skid ID (identifizierte Positioniervorrichtung) und jeden Datenpunkt

## Patentansprüche

1. Verfahren zur Prüfung der Maßhaltigkeit von transportablen Positioniervorrichtungen (P) für die Produktion von Kraftfahrzeugen, wobei die Positioniervorrichtungen (P) jeweils Aufnahmen (1, 3, 5, 7) aufweisen, so dass ein Karosseriebauteil (K) eines herzustellenden Kraftfahrzeugs geometrisch exakt auf der Positioniervorrichtung (P) positioniert werden kann, und wobei die Positioniervorrichtungen (P) in einem Kraftfahrzeugproduktionsumlauf mit dem jeweils darauf positionierten Karosseriebauteil (K) zur Produktion der Kraftfahrzeuge in unterschiedliche Arbeitsstationen bewegt werden,
**dadurch gekennzeichnet , dass** während dem Kraftfahrzeugproduktionsumlauf in den Arbeitsstationen und / oder in einer im Kraftfahrzeugproduktionsumlauf speziell zur Erfassung von Messwerten vorgesehenen Inline-Messstation vordefinierte Messpunkte (M) an dem jeweils auf der Positioniervorrichtung (P) positionierten Karosseriebauteil (K) lagevermessen werden, wobei durch Auswertung der Messpunkte (M) durch eine Steuereinheit die Maßhaltigkeit der transportablen Positioniervorrichtung (P) bestimmt wird.

2. Verfahren nach Anspruch 1,
**dadurch gekennzeichnet , dass** die vordefinierten Messpunkte (M), die an dem jeweils auf der Positioniervorrichtung (P) positionierten Karosseriebauteil (K) lagevermessen werden, so dass durch Auswertung der Messpunkte (M) durch eine Steuereinheit die Maßhaltigkeit der transportablen Positioniervorrichtung (P) bestimmt wird, ausschließlich Messpunkte (M) sind, die auch zur Überprüfung des Karosseriebauteils (K) selbst verwendet werden, also zur Bestimmung der Maßhaltigkeit des Karosseriebauteils (K).

3. Verfahren nach zumindest einem der vorhergehenden Ansprüche,
**dadurch gekennzeichnet , dass** die Positioniervorrichtungen (P) in der Steuereinheit identifiziert sind und während mehreren Kraftfahrzeugproduktionsumläufen in den Arbeitsstationen vordefinierte Messpunkte (M) an dem jeweils auf der selben identifizierten Positioniervorrichtung (P) positionierten Karosseriebauteil (K) lagevermessen werden, wobei durch Auswertung der Messpunkte (M) der selben identifizierten Positioniervorrichtung (P) in den mehreren Kraftfahrzeugproduktionsumläufen durch die Steuereinheit die Maßhaltigkeit der identifizierten transportablen Positioniervorrichtung (P) bestimmt wird.

4. Verfahren nach zumindest einem der vorhergehenden Ansprüche,
**dadurch gekennzeichnet , dass** die vordefinierten Messpunkte (M) an dem jeweils auf der Positioniervorrichtung (P) positionierten Karosseriebauteil (K) von der Steuereinheit zur Auswertung der Messpunkte (M) einer oder mehreren vordefinierten Messpunktgruppen zugeordnet werden, wobei in einer Messpunktgruppe jeweils sich korrelierend verhaltende Messpunkte (M) gruppiert sind.

5. Verfahren nach Anspruch 4,
**dadurch gekennzeichnet , dass** die vordefinierten Messpunkte (M) genau sieben Messpunktgruppen zugeordnet werden, insbesondere einer x-Messpunktgruppe, zwei y-Messpunktgruppen und vier z-Messpunktgruppen.

6. Verfahren nach Anspruch 4 oder 5,
**dadurch gekennzeichnet , dass** jede Messpunktgruppe genau einer Aufnahme (1, 3, 5, 7) der Positioniervorrichtung (P) zugeordnet ist, wobei aus einer Lageabweichung in einer Messpunktgruppe von der Steuereinheit die Maßhaltigkeit an der zugeordneten Aufnahme (1, 3, 5, 7) bestimmt wird.

7. Verfahren nach zumindest einem der vorhergehenden Ansprüche,
**dadurch gekennzeichnet , dass** die Positioniervorrichtungen (P) jeweils genau vier Aufnahmen (1, 3, 5, 7) aufweisen, so dass ein Karosseriebauteil (K) eines herzustellenden Kraftfahrzeugs geometrisch exakt auf der Positioniervorrichtung (P) positioniert werden kann.

8. Verfahren nach Anspruch 7,
**dadurch gekennzeichnet , dass** die vier Aufnahmen (1, 3, 5, 7) gebildet sind durch eine xyz-Aufnahme, eine yz-Aufnahme und zwei z-Aufnahmen.

9. Verfahren nach zumindest einem der vorhergehenden Ansprüche,
**dadurch gekennzeichnet , dass** die Positioniervorrichtungen (P) jeweils zusätzlich zu den Aufnahmen (1, 3, 5, 7) weitere Auflagepunkte (A) aufweisen, um ein Durchhängen der auf der Positioniervorrichtung (P) positionierten Karosseriebauteile (K) zu verhindern.

## Claims

1. Method for testing the dimensional accuracy of transportable positioning devices (P) for the production of motor vehicles, wherein the positioning devices (P) each have locators (1, 3, 5, 7) so that a body component (K) of a motor vehicle to be manufactured can be positioned geometrically exactly on the positioning device (P) and wherein the positioning devices (P) with the respective body component (K) positioned thereon in a motor vehicle production cycle are moved to different workstations for the production of the motor vehicles,
**characterized in that** , during the motor vehicle production cycle in the workstations and/or in an inline measuring station specifically intended for the acquisition of measured values in the motor vehicle production cycle, predefined measuring points (M) on the body component (K) positioned on the positioning device (P) are measured, wherein the dimensional accuracy of the transportable positioning device (P) is determined by a control unit by evaluating the measuring points (M).

2. Method according to Claim 1,
**characterized in that** , the predefined measuring points (M), which are measured on the respective body component (K) positioned on the positioning device (P), so that the dimensional accuracy of the transportable positioning device (P) is determined by a control unit by evaluation of the measuring points (M), are exclusively measuring points (M) which are also used to check the body component (K) itself, i.e. to determine the dimensional accuracy of the body component (K).

3. Method according to at least one of the preceding claims,
**characterized in that**, the positioning devices (P) are identified in the control unit and during multiple motor vehicle production cycles in the workstations, predefined measuring points (M) on the body component (K) positioned on the same identified positioning device (P) are measured, wherein the dimensional accuracy of the identified transportable positioning device (P) is determined by the control unit by evaluating the measuring points (M) of the same identified positioning device (P) in the multiple motor vehicle production cycles.

4. Method according to at least one of the preceding claims;
**characterized in that**, the predefined measuring points (M) on the respective body component (K) positioned on the positioning device (P) are assigned by the control unit for the evaluation of the measuring points (M) to one or more predefined measuring point groups, wherein respective measuring points (M) behaving in a correlated way are grouped in a measuring point group.

5. Method according to Claim 4,
**characterized in that**, the predefined measuring points (M) are assigned to exactly seven measuring point groups, in particular an x-measuring point group, two y-measuring point groups and four z-measuring point groups.

6. Method according to Claim 4 or 5,
**characterized in that**, each measuring point group is assigned exactly one locator (1, 3, 5, 7) of the positioning device (P), wherein the dimensional accuracy at the assigned locator (1, 3, 5, 7) is determined by the control unit from a position deviation in a measuring point group.

7. Method according to at least one of the preceding claims;
**characterized in that** , the positioning devices (P) each have exactly four locators (1, 3, 5, 7), so that a body component (K) of a motor vehicle to be manufactured can be geometrically positioned exactly on the positioning device (P).

8. Method according to Claim 7,
**characterized in that** , the four locators (1, 3, 5, 7) are formed by an xyz-locator, a yz-locator and two z-locators.

9. Method according to at least one of the preceding claims;
**characterized in that,** in addition to the locators (1, 3, 5, 7) the positioning devices (P) each have further support points (A) to prevent sagging of the body components (K) positioned on the positioning device (P).

## Revendications

1. Procédé de contrôle de tenue des cotes de dispositifs de positionnement transportables (P) pour la production de véhicules automobiles, les dispositifs de positionnement (P) comportant respectivement des prises de vue (1, 3, 5, 7), de sorte qu'un composant de carrosserie (K) d'un véhicule automobile à fabriquer puisse être positionné géométriquement exactement sur le dispositif de positionnement (P), et les dispositifs de positionnement (P) étant déplacés dans différents postes de travail dans un cycle de production de véhicules automobiles avec le composant de carrosserie (K) respectivement positionné dessus pour la production des véhicules automobiles, **caractérisé en ce que** pendant le cycle de production de véhicules automobiles dans les postes de travail et / ou dans un poste en ligne spécifiquement prévu dans le cycle de production de véhicules automobiles pour détecter les valeurs de mesure, des points de mesure (M) prédéfinis sont mesurés dans leur position au niveau du composant de carrosserie (K) respectivement positionné sur le dispositif de positionnement (P), la tenue des cotes du dispositif de positionnement transportable (P) étant définie par analyse des points de mesure (M) au travers d'une unité de commande.

2. Procédé selon la revendication 1, **caractérisé en ce que** les points de mesure (M) prédéfinis dont la position est mesurée au niveau du composant de carrosserie (K) respectivement positionné sur le dispositif de positionnement (P), de sorte que la tenue des cotes du dispositif de positionnement transportable (P) soit définie par analyse des points de mesure (M) au travers d'une unité de commande, qui sont exclusivement des points de mesure (M) également utilisés pour le contrôle du composant de carrosserie (K) lui-même, donc pour déterminer la tenue des cotes du composant de carrosserie (K).

3. Procédé selon au moins l'une quelconque des revendications précédentes, **caractérisé en ce que** les dispositifs de positionnement (P) sont identifiés dans l'unité de commande et que des points de mesure (M) prédéfinis dans les postes de travail pendant plusieurs cycles de production de véhicules automobiles sont mesurés dans leur position au niveau du composant de carrosserie (K) respectif positionné sur le même dispositif de positionnement (P) identifié, la tenue des cotes du dispositif de positionnement (P) transportable identifié étant définie par analyse des points de mesure (M) du même dispositif de positionnement (P) identifié dans les multiples cycles de production de véhicules automobiles au travers de l'unité de commande.

4. Procédé selon au moins l'une quelconque des revendications précédentes, **caractérisé en ce que** les points de mesure (M) prédéfinis sont associés par l'unité de commande au niveau du composant de carrosserie (K) respectivement positionné sur le dispositif de positionnement (P) afin d'analyser les points de mesure (M) d'un ou plusieurs groupes de points de mesure prédéfinis, les points de mesure (M) étant groupés en un groupe de points de mesure se comportant respectivement de façon corrélée.

5. Procédé selon la revendication 4, **caractérisé en ce que** les points de mesure (M) prédéfinis sont exactement associés à sept groupes de points de mesure, notamment un groupe de points de mesure x, deux groupes de points de mesure y et quatre groupes de points de mesure z.

6. Procédé selon la revendication 4 ou 5, **caractérisé en ce que** chaque groupe de points de mesure est exactement associé à une prise de vue (1, 3, 5, 7) du dispositif de positionnement (P), la tenue des cotes étant définie au niveau de la prise de vue (1, 3, 5, 7) associée à partir d'un écart de position dans un groupe de points de mesure de l'unité de commande.

7. Procédé selon au moins l'une quelconque des revendications précédentes, **caractérisé en ce que** les dispositifs de positionnement (P) comportent respectivement exactement quatre prises de vue (1, 3, 5, 7), de sorte qu'un composant de carrosserie (K) d'un véhicule automobile à fabriquer puisse être positionné géométriquement exactement sur le dispositif de positionnement (P).

8. Procédé selon la revendication 7, **caractérisé en ce que** les quatre prises de vue (1, 3, 5, 7) sont formées au travers d'une prise de vue xyz, d'une prise de vue yz et de deux prises de vue z.

9. Procédé selon au moins l'une quelconque des revendications précédentes, **caractérisé en ce que** les dispositifs de positionnement (P) comportent respectivement en outre des prises de vue (1, 3, 5, 7) des points d'appui (A) supplémentaires pour empêcher un fléchissement des composants (K) positionnés sur le dispositif de positionnement (P).
